# EUROPEAN PATENT SPECIFICATION

(11) **EP 2 999 248 B1**
(45) Date of publication and mention of the grant of the patent: **13.11.2019**
(21) Application number: 13886210.7
(22) Date of filing: 04.06.2013
(51) Int. Cl.: H04W 8/24

(54) **INFORMATION OBTAINING METHOD AND DEVICE**
VERFAHREN UND VORRICHTUNG ZUR INFORMATIONSGEWINNUNG
PROCÉDÉ ET DISPOSITIF D'OBTENTION D'INFORMATIONS

(43) Date of publication of application: 23.03.2016
(73) Proprietor: Huawei Technologies Co., Ltd., Longgang District Shenzhen, Guangdong 518129 (CN)
(72) Inventor: LU, Hui, Shenzhen Guangdong 518129 (CN); WANG, Yulin, Shenzhen Guangdong 518129 (CN); SHUAI, Yanglai, Shenzhen Guangdong 518129 (CN)
(74) Representative: Gill Jennings & Every LLP
(86) International application number: PCT/CN2013/076703
(87) International publication number: WO 2014/194467

(56) References cited:
- EP-A1- 2 273 834
- WO-A1-2012/150668
- WO-A1-2013/043088
- CN-A- 1 859 489
- CN-A- 102 469 435
- CN-A- 102 487 500
- KR-A- 20080 060 745
- US-A1- 2011 176 424
- US-A1- 2012 207 130
- US-A1- 2013 102 277
- HUAWEI: "Idle mode Inter RAT load balancing", 3GPP DRAFT; R3-080757_IDLE MODE INTER RAT LOAD BALANCING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Shenzhen, China; 20080326, 26 March 2008 (2008-03-26), XP050163964, [retrieved on 2008-03-26]

## Description

### TECHNICAL FIELD

The present disclosure relates to the field of communications technologies, and in particular, to a method and a device for obtaining information.

### BACKGROUND

In a Long Term Evolution (Long Term Evolution, LTE for short) system, a base station cannot obtain a type of a user terminal, and therefore the base station cannot identify information such as a specific type or a specific model of the user terminal.

HUAWEI: "Idle mode Inter RAT load balancing", 3GPP DRAFT R3-080757, IDLE MODE INTER RAT LOAD BALANCING, 3RD GENERATION PARTNERSHIP PROJECT (3GPP), MOBILE COMPETENCE CENTRE, 650 ROUTE DES LUCIOLES; F-06921 SOPHIA-ANTIPOLIS CEDEX, FRANCE, Vol. RAN WG3 No. Shenzhen, China, dated 26 March 2008 relates to Idle mode Inter RAT load balancing.

WO 2013043088 relates to methods and network nodes for controlling usage of caching in a telecommunications system.

### SUMMARY

Aspects of the present disclosure provide a method and a device for obtaining information, to solve the problem of not being able to obtain terminal information by a base station.

To achieve the foregoing objectives, the present disclosure provides a method and a device for obtaining information as set out in the independent claims.

According to the method and device for obtaining information that are provided by the aspects of the present disclosure, terminal information of a first terminal is obtained according to SPID information of the first terminal and a mapping relationship between terminal information and subscriber profile IDs SPIDs, thereby solving the problem of not being able to obtain terminal information by a base station.

### BRIEF DESCRIPTION OF DRAWINGS

To describe technical solutions in aspects of the present disclosure or in the prior art more clearly, the following briefly introduces accompanying drawings required for describing the aspects or the prior art. Apparently, the accompanying drawings in the following description show merely some aspects of the present disclosure, and a person of ordinary skill in the art may still derive other drawings from these accompanying drawings without creative efforts.
FIG. 1 is a schematic flowchart of a method for obtaining information according to an aspect of the present disclosure;
FIG. 2 is a schematic flowchart of another method for obtaining information according to an aspect of the present disclosure;
FIG. 3 is a schematic flowchart of still another method for obtaining information according to an aspect of the present disclosure;
FIG. 4 is a schematic flowchart of a method for obtaining information according to another aspect of the present disclosure;
FIG. 5 is a schematic flowchart of another method for obtaining information according to another aspect of the present disclosure;
FIG. 6 is a schematic structural diagram of a network architecture according to an aspect of the present disclosure;
FIG. 7 is a schematic flowchart of still another method for obtaining information according to another aspect of the present disclosure;
FIG. 8 is a schematic structural diagram of a base station according to an aspect of the present disclosure;
FIG. 9 is a schematic structural diagram of an element management server according to an aspect of the present disclosure;
FIG. 10 is a schematic structural diagram of a home subscriber server according to an aspect of the present disclosure;
FIG. 11 is a schematic structural diagram of a mobility management entity according to an aspect of the present disclosure;
FIG. 12 is a schematic structural diagram of a base station according to another aspect of the present disclosure;
FIG. 13 is a schematic structural diagram of an element management server according to another aspect of the present disclosure;
FIG. 14 is a schematic structural diagram of a home subscriber server according to another aspect of the present disclosure;
FIG. 15 is a schematic structural diagram of a mobility management entity according to another aspect of the present disclosure; and
FIG. 16 is a schematic structural flowchart of a system for obtaining information according to an aspect of the present disclosure.

### DESCRIPTION OF ASPECTS

The following clearly and completely describes technical solutions in aspects of the present disclosure with reference to accompanying drawings in the aspects of the present disclosure. Apparently, the described aspects are merely a part rather than all of the aspects of the present disclosure. All other aspects obtained by a person of ordinary skill in the art based on the aspects of the present disclosure without creative efforts shall fall within a protection scope of the present disclosure.

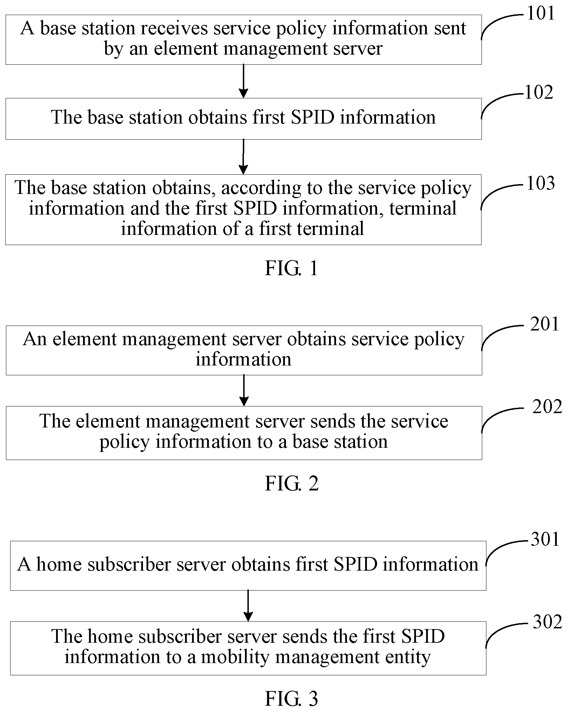

An aspect of the present disclosure provides a method for obtaining information. Referring to FIG. 1, the method includes:
101: A base station receives service policy information sent by an element management server (Element management Server, EMS for short).

The service policy information includes: a mapping relationship between terminal information and subscriber profile IDs (Subscriber Profile ID, SPID for short).

102: The base station obtains first SPID information.

The first SPID information is an SPID corresponding to a first terminal.

103: The base station obtains, according to the service policy information and the first SPID information, terminal information of the first terminal.

Specifically, after receiving service policy information and SPID information, the base station may obtain the terminal information of the first terminal, according to the SPID information and a correspondence between terminal information and SPIDs in the service policy information.

An aspect of the present disclosure provides another method for obtaining information. Referring to FIG. 2, the another method includes:
201: An EMS obtains service policy information.

The service policy information includes: a mapping relationship between terminal information and subscriber profile IDs SPIDs.

202: The EMS sends the service policy information to a base station, where the service policy information is used in a process in which the base station obtains terminal information of a first terminal.

Specifically, the service policy information is configured on an element management server by an operator after being defined by the operator according to terminal information.

An aspect of the present disclosure provides another method for obtaining information. Referring to FIG. 3, the another method includes:
301: An HSS obtains first SPID information.

The first SPID information may be configured on a home subscriber server by an operator, and may be an SPID corresponding to a first terminal.

302: The HSS sends the first SPID information to a mobility management entity (Mobility Management Entity, MME for short), so that the MME sends the first SPID information to a base station.

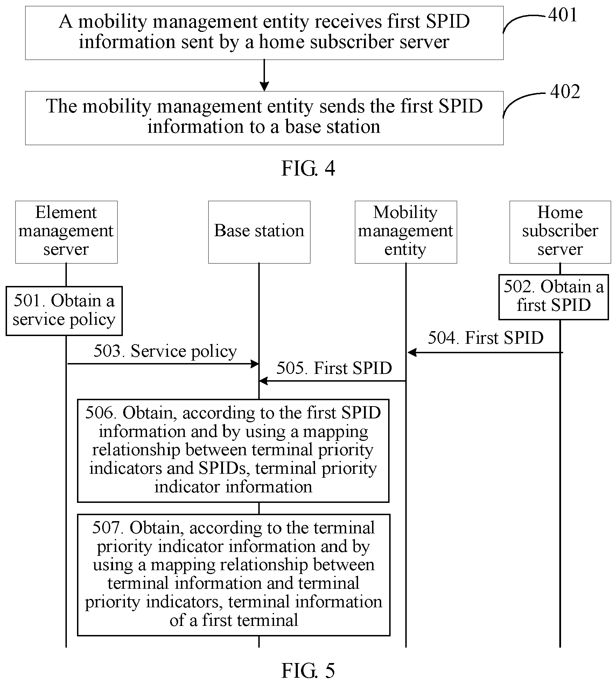

An aspect of the present disclosure provides another method for obtaining information. Referring to FIG. 4, the another method includes:
401: An MME receives first SPID information sent by an HSS.

The first SPID information is an SPID corresponding to a first terminal.

402: The MME sends the first SPID information to a base station, where the first SPID information is used by the base station to obtain terminal information of the first terminal.

In the method for obtaining information according to this aspect of the present disclosure, terminal information of a first terminal is obtained according to SPID information of the first terminal and a mapping relationship between terminal information and subscriber profile IDs SPIDs, thereby solving the problem of not being able to obtain terminal information by a base station.

An aspect of the present disclosure provides a method for obtaining information. Referring to FIG. 5, the method includes:
501: An EMS obtains service policy information.

The service policy information includes: a mapping relationship between terminal information and subscriber profile IDs SPIDs.

Optionally, the mapping relationship between terminal information and subscriber profile IDs SPIDs may include: a mapping relationship between terminal information and terminal priority indicators, and a mapping relationship between terminal priority indicators and SPIDs; and further, the mapping relationship may be expressed in a form of a mapping table.

Specifically, the mapping relationship between terminal information and terminal priority indicators is used to indicate a correspondence between terminal information and terminal priority indicators, where the terminal information includes one of or a combination of the following information: a terminal type, a terminal subscription state, a terminal supplier, a terminal model, and a terminal operating system; and accordingly, when the terminal information includes one type or multiple types of the foregoing information, there is a correspondence between terminal priority indicators and the type or the multiple types of the terminal information. Apparently, the terminal information listed above is merely an example, and the terminal information mentioned in the aspects of the present disclosure is not limited to the terminal information listed above.

The mapping relationship between terminal priority indicators and SPIDs is used to indicate a correspondence between terminal priority indicators and SPIDs, where there is a correspondence between the SPIDs and the terminal priority indicators.

Further, SPID information is configured by an operator according to terminal information of a first terminal.

Specifically, the mapping relationship between terminal information and terminal priority indicators and the mapping relationship between terminal priority indicators and SPIDs may be configured by an operator according to information of the first terminal when a subscriber is registered or a subscriber policy is changed, where the first terminal is any terminal in an actual operating environment, and is not specifically limited herein.

502: An HSS obtains first SPID information.

Specifically, first SPID information may be configured on an HSS by an operator according to information of the first terminal.

503: The base station receives the service policy information sent by the EMS, where the service policy information is used in a process in which the base station obtains the terminal information of the first terminal.

504: The HSS sends the first SPID information to an MME.

505: The base station receives the first SPID information sent by the MME.

The first SPID information is an SPID corresponding to the first terminal.

When a subscriber is registered or subscriber information is changed, the HSS sends the first SPID information to the MME by using S1 signaling, and the MME transmits the first SPID information to the base station by using the S1 signaling, where the S1 signaling may include one of or a combination of the following: an initial context setup request, a user equipment context modification request, and a handover request. Specifically, the first SPID information may be transmitted by using an information element (for example: a transparent transmission container from a source base station to a target base station) in a handover request.

506: The base station obtains, according to the first SPID information and by using the mapping relationship between terminal priority indicators and SPIDs, terminal priority indicator information.

507: The base station obtains, according to the terminal priority indicator information and by using the mapping relationship between terminal information and terminal priority indicators, the terminal information of the first terminal.

Specifically, the first SPID information configured by an operator may include: a system frequency priority configuration indicator, a system frequency priority configuration group label, whether discontinuous reception is supported, whether pre-scheduling is supported, whether there is a load balancing switch for different frequencies, whether there is a load balancing switch for different systems, and whether there is a switch for switching back to a home public land mobile network (Home Public Land Mobile Network, HPLMN for short) based on the SPID.

Specifically, the following shows a structure of a mapping table between terminal information and terminal priority indicators:

| Type | Subscription State | Supplier | Model | Operating System | Terminal Priority Indicator |
|---|---|---|---|---|---|
| Smartphone | Subscribed | Apple | iPhone 5 | Internet operating system 5 | 1 |
| | | | iPhone 4 | Internet operating system 4 | 2 |
| | | | Others | N/A | 3 |
| | | Huawei | D2 | Android 5.0 | 2 |
| | | | Others | N/A | 4 |
| | | Others | N/A | N/A | 5 |
| | Not subscribed | Samsung | Galaxy Note II | Android 4.0 | 6 |
| | | | Others | N/A | 7 |
| | | HTC | HTC one | Android 4.0 | 6 |
| | | | Others | N/A | 7 |
| | | Others | N/A | N/A | 8 |
| Datacard | Subscribed | Huawei | E397 | N/A | 9 |
| | | Samsung | GT-B3730 | N/A | 10 |
| | | Others | N/A | N/A | 11 |
| | Not subscribed | Huawei | E392 | N/A | 12 |
| | | ZTE | AL600 | N/A | 13 |
| | | Others | N/A | N/A | 14 |
| Others | N/A | N/A | N/A | N/A | 15 |

Apparently, the mapping table between terminal information and terminal priority indicators is not limited to including only the content listed in the foregoing table, and an operator may determine, according to a specific requirement, whether other information further needs to be added to the mapping table.

A structure of a mapping table between terminal priority indicators and SPIDs may be:

| SPID | Operator-defined SPID | Terminal Priority Indicator |
|---|---|---|
| 1 | A | 3 |
| 2 | B | 4 |
| 3 | C | 1 |
| 4 | D | 2 |
| 5 | E | 2 |

In the mapping table, the operator-defined SPID is an indication identifier, and according to the operator-defined SPID, information shown in the following table may be learned accordingly:

| Existing Policy | System Frequency Priority Configuration Indicator | System Frequency Priority Configuration Group Label | Whether Discontinuous Reception Is Supported | Whether Pre-scheduling Is Supported | Load Balancing Switch for Different Frequencies | Load Balancing Switch for Different Systems | Switch for Switching Back to HPLMN |
|---|---|---|---|---|---|---|---|
| A | Configured | 1 | Yes | No | No | Yes | No |
| B | Configured | 1 | Yes | No | No | Yes | No |
| C | Configured | 1 | Yes | No | No | Yes | No |
| D | Not configured | N/A | No | Yes | Yes | Yes | Yes |
| E | Not configured | N/A | No | Yes | Yes | Yes | Yes |

Apparently, the mapping table between terminal priority indicators and SPIDs is not limited to including only the content listed in the foregoing table, and an operator may determine, according to a specific requirement, whether other information further needs to be added to the mapping table.

Specifically, a value of a first SPID being 4 is used as an example for description. When an indication value of the first SPID received by the base station is 4, the base station may obtain, according to the mapping table between terminal priority indicators and SPIDs, that a terminal priority indicator of the terminal is 2. When obtaining that the terminal priority indicator is 2, the base station may obtain information of the terminal according to the mapping table between terminal information and terminal priority indicators.

After obtaining the information of the terminal, the base station may perform differentiated processing for different terminal types, for example, terminal penetration statistics, differentiated processing for intelligent terminal and data card services, specific terminal guarantee, and so on.

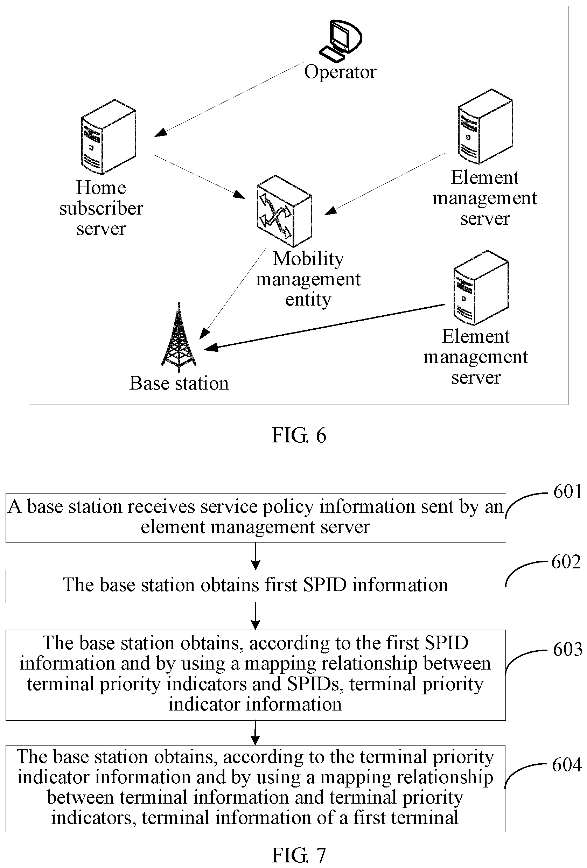

The method for obtaining information according to this aspect of the present disclosure is applied to an SPID transmission network structure in an LTE system; an HSS transmits configured SPID information to a base station through an MME, and an EMS transmits service policy information to the base station through the MME, so that a function of obtaining terminal information by the base station is implemented. Referring to FIG. 6, FIG. 6 shows the network architecture.

In the method for obtaining information according to this aspect of the present disclosure, terminal information of a first terminal is obtained according to SPID information of the first terminal and a mapping relationship between terminal information and subscriber profile IDs SPIDs, thereby solving the problem of not being able to obtain terminal information by a base station. Further, parameter optimization and terminal-specific support may be implemented for different terminal types, to improve network performance.

An aspect of the present disclosure provides a method for obtaining information. Referring to FIG. 7, the method includes the following steps:
601: A base station receives service policy information sent by an element management server EMS, where the service policy information includes: a mapping relationship between terminal information and subscriber profile IDs SPIDs.

SPID information of a first terminal is configured by an operator according to terminal information of a first terminal.

The mapping relationship between terminal information and subscriber profile IDs SPIDs includes: a mapping relationship between terminal information and terminal priority indicators, and a mapping relationship between terminal priority indicators and SPIDs.

602: The base station obtains first SPID information, where the first SPID information is an SPID corresponding to the first terminal.

The first SPID information is sent by a home subscriber server HSS, and then is forwarded by a mobility management entity MME to the base station.

When a subscriber is registered or subscriber information is changed, the HSS sends the first SPID information to the MME by using S1 signaling, and the MME transmits the first SPID information to the base station by using the S1 signaling, where the S1 signaling may include one of or a combination of the following: an initial context setup request, a user equipment context modification request, and a handover request. Specifically, the first SPID information may be transmitted by using an information element (for example: a transparent transmission container from a source base station to a target base station) in a handover request.

603: The base station obtains, according to the first SPID information and by using the mapping relationship between terminal priority indicators and SPIDs, terminal priority indicator information of the first terminal.

604: The base station obtains, according to the obtained terminal priority indicator information and by using the mapping relationship between terminal information and terminal priority indicators, the terminal information of the first terminal.

The mapping relationship between terminal information and terminal priority indicators is used to indicate a correspondence between terminal information and terminal priority indicators, where the terminal information includes one of or a combination of the following information: a terminal type, a terminal subscription state, a terminal supplier, a terminal model, and a terminal operating system.

The mapping relationship between terminal priority indicators and SPIDs is used to indicate a correspondence between terminal priority indicators and SPIDs.

Specifically, the first SPID information configured by an operator may include: a system frequency priority configuration indicator, a system frequency priority configuration group label, whether discontinuous reception is supported, whether pre-scheduling is supported, whether there is a load balancing switch for different frequencies, whether there is a load balancing switch for different systems, and whether there is a switch for switching back to an HPLMN based on the SPID. Apparently, there is a correspondence among the following information: system frequency priority configuration indicator, system frequency priority configuration group label, whether discontinuous reception is supported, whether pre-scheduling is supported, whether there is a load balancing switch for different frequencies, whether there is a load balancing switch for different systems, and whether there is a switch for switching back to an HPLMN based on the SPID.

For a structure of the mapping table between terminal information and terminal priority indicators, and a structure of the mapping table between terminal priority indicators and SPIDs, refer to the description in step 507 in the foregoing aspect, and details are not herein again.

In the method for obtaining information according to this aspect of the present disclosure, terminal information of a first terminal is obtained according to SPID information of the first terminal and a mapping relationship between terminal information and subscriber profile IDs SPIDs, thereby solving the problem of not being able to obtain terminal information by a base station. Further, parameter optimization and terminal-specific support may be implemented for different terminal types, to improve network performance.

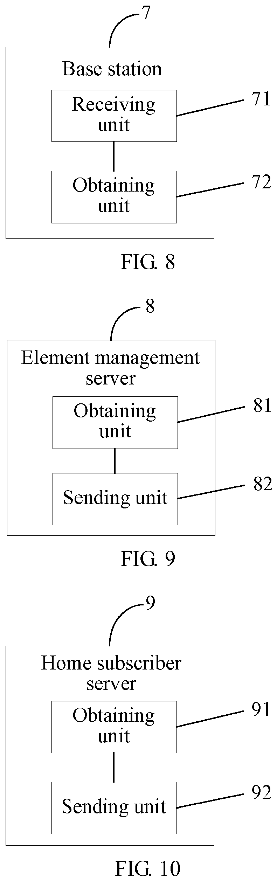

An aspect of the present disclosure provides a base station 7. Referring to FIG. 8, the base station 7 includes a receiving unit 71 and an obtaining unit 72.

The receiving unit 71 is configured to receive service policy information sent by an element management server EMS, where the service policy information includes: a mapping relationship between terminal information and subscriber profile IDs SPIDs.

The mapping relationship between terminal information and subscriber profile IDs SPIDs includes: a mapping relationship between terminal information and terminal priority indicators, and a mapping relationship between terminal priority indicators and SPIDs, where the mapping relationship is expressed in a form of a mapping table.

The obtaining unit 72 is configured to obtain first SPID information.

The first SPID information is an SPID corresponding to a first terminal.

The first SPID information is configured by an operator according to terminal information of the first terminal.

The obtaining unit 72 is further configured to obtain, according to the service policy information and the first SPID information, the terminal information of the first terminal.

The obtaining unit 72 is specifically configured to receive the first SPID information sent by a mobility management entity MME, where the first SPID information is sent by a home subscriber server HSS to the MME.

Further, the obtaining unit 72 is specifically configured to obtain, according to the first SPID information and by using the mapping relationship between terminal priority indicators and SPIDs, terminal priority indicator information.

The obtaining unit 72 is specifically configured to obtain, according to the terminal priority indicator information and by using the mapping relationship between terminal information and terminal priority indicators, the terminal information of the first terminal.

The mapping relationship between terminal information and terminal priority indicators is used to indicate a correspondence between terminal information and terminal priority indicators, where the terminal information includes one of or a combination of the following information: a terminal type, a terminal subscription state, a terminal supplier, a terminal model, and a terminal operating system; and there is a correspondence between terminal priority indicators and each type of information in the terminal information.

The mapping relationship between terminal priority indicators and SPIDs is used to indicate a correspondence between terminal priority indicators and SPIDs, where there is a correspondence between SPIDs and terminal priority indicators.

Further, the mapping relationship between terminal priority indicators and SPIDs is used to indicate a correspondence between SPIDs configured by an operator and terminal priority indicators.

The base station provided by this aspect of the present disclosure obtains, according to SPID information of a first terminal and a mapping relationship between terminal information and subscriber profile IDs SPIDs, terminal information of the first terminal, thereby solving the problem of not being able to obtain terminal information by a base station. Further, parameter optimization and terminal-specific support may be implemented for different terminal types, to improve network performance.

An aspect of the present disclosure provides an element management server 8. Referring to FIG. 9, the element management server 8 includes an obtaining unit 81 and a sending unit 82, where:
the obtaining unit 81 is configured to obtain service policy information, where the service policy information includes: a mapping relationship between terminal information and subscriber profile IDs SPIDs; and
the sending unit 82 is configured to send the service policy information to a base station, where the service policy information is used in a process in which the base station obtains terminal information of a first terminal.

The mapping relationship between terminal information and subscriber profile IDs SPIDs includes: a mapping relationship between terminal information and terminal priority indicators, and a mapping relationship between terminal priority indicators and SPIDs, where the mapping relationship is expressed in a form of a mapping table.

The mapping relationship between terminal information and terminal priority indicators is used to indicate a correspondence between terminal information and terminal priority indicators. The terminal information includes one of or a combination of the following information: a terminal type, a terminal subscription state, a terminal supplier, a terminal model, and a terminal operating system; and there is a correspondence between terminal priority indicators and each type of information in the terminal information.

The mapping relationship between terminal priority indicators and SPIDs is used to indicate a correspondence between terminal priority indicators and SPIDs, where there is a correspondence between SPIDs and terminal priority indicators.

Further, the mapping relationship between terminal priority indicators and SPIDs is further used to indicate a correspondence between SPIDs configured by an operator and terminal priority indicators.

SPID information of the first terminal is configured by an operator according to the terminal information of the first terminal.

The element management server provided by this aspect of the present disclosure obtains, according to SPID information of a first terminal and a mapping relationship between terminal information and subscriber profile IDs SPIDs, terminal information of the first terminal, thereby solving the problem of not being able to obtain terminal information by a base station. Further, parameter optimization and terminal-specific support may be implemented for different terminal types, to improve network performance.

An aspect of the present disclosure provides a home subscriber server 9. Referring to FIG. 10, the home subscriber server 9 includes an obtaining unit 91 and a sending unit 92, where:
the obtaining unit 91 is configured to obtain first subscriber profile ID SPID information,
where the first SPID information is an SPID corresponding to a first terminal; and
the sending unit 92 is configured to send the first SPID information to a mobility management entity MME, so that the MME sends the first SPID information to a base station.

The home subscriber server provided by this aspect of the present disclosure obtains first SPID information to facilitate a base station obtain terminal information, thereby solving the problem of not being able to obtain terminal information by a base station. Further, parameter optimization and terminal-specific support may be implemented for different terminal types, to improve network performance.

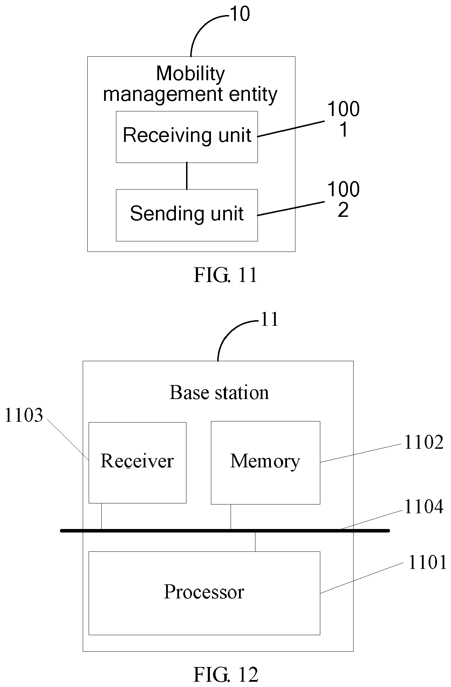

An aspect of the present disclosure provides a mobility management entity 10. Referring to FIG. 11, the mobility management entity 10 includes a receiving unit 1001 and a sending unit 1002, where:
the receiving unit 1001 is configured to receive first subscriber profile ID SPID information sent by a home subscriber server HSS,
where the first SPID information is an SPID corresponding to a first terminal; and
the sending unit 1002 is configured to send the first SPID information to a base station, where the first SPID information is used in a process in which the base station obtains terminal information of the first terminal.

The mobility management entity provided by this aspect of the present disclosure obtains first SPID information to facilitate a base station obtain terminal information, thereby solving the problem of not being able to obtain terminal information by a base station. Further, parameter optimization and terminal-specific support may be implemented for different terminal types, to improve network performance.

An aspect of the present disclosure provides a base station 11. Referring to FIG. 12, the base station 11 includes: at least one processor 1101, memory 1102, receiver 1103, and bus 1104, and the at least one processor 1101, memory 1102, and receiver 1103 are connected and communicate with each other by using the bus 1104.

The bus 1104 may be an industry standard architecture (Industry Standard Architecture, ISA for short) bus, a peripheral component interconnect (Peripheral Component Interconnect, PCI for short) bus, an extended industry standard architecture (Extended Industry Standard Architecture, EISA for short) bus, or the like. The bus 1104 may be classified into an address bus, a data bus, a control bus, and so on. For the convenience of illustration, the bus 1104 is indicated by using only one bold line in FIG. 12, which, however, does not mean that there is only one bus or one type of bus.

The memory 1102 is configured to store program code, where the program code includes an operation instruction. The memory 1102 may include a high-speed RAM, and may further include a non-volatile memory (non-volatile memory), for example, at least one magnetic disk memory.

The processor 1101 may be a central processing unit (Central Processing Unit, CPU for short), or may be an application specific integrated circuit (Application Specific Integrated Circuit, ASIC for short), or may be configured as one or more integrated circuits for implementing the aspects of the present disclosure.

The processor 1101 is configured to invoke the program code in the memory.

The receiver 1103 is configured to receive service policy information sent by an element management server EMS, where the service policy information includes: a mapping relationship between terminal information and subscriber profile IDs SPIDs.

The mapping relationship between terminal information and subscriber profile IDs SPIDs includes: a mapping relationship between terminal information and terminal priority indicators, and a mapping relationship between terminal priority indicators and SPIDs, where the mapping relationship is expressed in a form of a mapping table.

The mapping relationship between terminal information and terminal priority indicators is used to indicate a correspondence between terminal information and terminal priority indicators, where the terminal information includes one of or a combination of the following information: a terminal type, a terminal subscription state, a terminal supplier, a terminal model, and a terminal operating system; and there is a correspondence between terminal priority indicators and each type of information in the terminal information.

The mapping relationship between terminal priority indicators and SPIDs is used to indicate a correspondence between terminal priority indicators and SPIDs, where there is a correspondence between SPIDs and terminal priority indicators.

Further, a mapping table between terminal priority indicators and SPIDs is further used to indicate a correspondence between SPIDs configured by an operator and terminal priority indicators.

The receiver 1103 is further configured to obtain first SPID information, where the first SPID information is an SPID corresponding to a first terminal.

The first SPID information is sent by a home subscriber server HSS, and then is forwarded by a mobility management entity MME to the base station.

The processor 1101 is further configured to obtain, according to the service policy information and the first SPID information that are received by the receiver 1103, terminal information of the first terminal.

Further, the receiver 1103 is specifically configured to receive the first SPID information sent by the mobility management entity MME, where the first SPID information is sent by the home subscriber server HSS to the MME.

The processor 1101 is specifically configured to obtain, according to the first SPID information received by the receiver 1103 and by using the mapping relationship between terminal priority indicators and SPIDs, terminal priority indicator information.

The processor 1101 is specifically configured to obtain, according to the terminal priority indicator information obtained by the receiver 1103 and by using the mapping relationship between terminal information and terminal priority indicators, the terminal information of the first terminal.

The base station for obtaining information provided by the aspect of the present disclosure obtains, according to a mapping relationship between terminal information and subscriber profile IDs SPIDs, and SPID information of a first terminal, terminal information of the first terminal, thereby solving the problem that a base station cannot obtain terminal information. Further, parameter optimization and terminal-specific support may be implemented for different terminal types, to improve network performance.

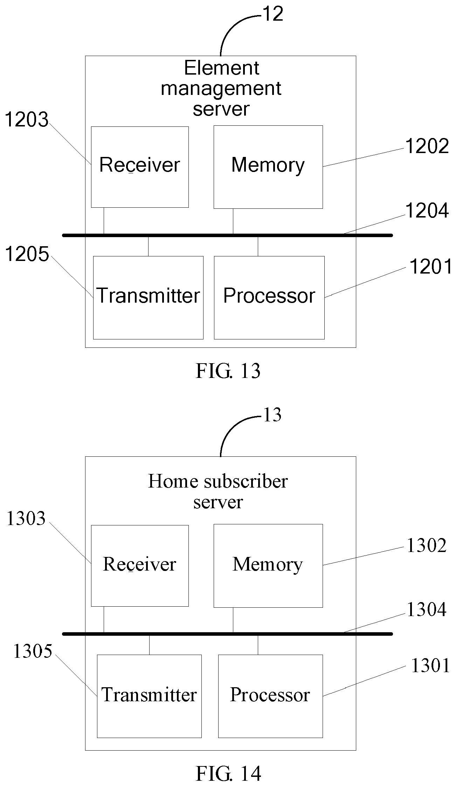

An aspect of the present disclosure provides an element management server 12. Referring to FIG. 13, the element management server 12 includes: at least one processor 1201, memory 1202, receiver 1203, transmitter 1205, and bus 1204, and the at least one processor 1201, memory 1202, receiver 1203, and transmitter 1205 are connected and communicate with each other by using the bus 1204.

The bus 1204 may be an industry standard architecture (Industry Standard Architecture, ISA for short) bus, a peripheral component interconnect (Peripheral Component Interconnect, PCI for short) bus, an extended industry standard architecture (Extended Industry Standard Architecture, EISA for short) bus, or the like. The bus 1204 may be classified into an address bus, a data bus, a control bus, and so on. For the convenience of illustration, the bus 1204 is indicated by using only one bold line in FIG. 13, which, however, does not mean that there is only one bus or one type of bus.

The memory 1202 is configured to store program code, where the program code includes an operation instruction. The memory 1202 may include a high-speed RAM, and may further include a non-volatile memory (non-volatile memory), for example, at least one magnetic disk memory.

The processor 1201 may be a central processing unit (Central Processing Unit, CPU for short), or may be an application specific integrated circuit (Application Specific Integrated Circuit, ASIC for short), or may be configured as one or more integrated circuits for implementing the aspects of the present disclosure.

The processor 1201 is further configured to invoke the program code in the memory.

The receiver 1203 is configured to obtain service policy information, where the service policy information includes: a mapping relationship between terminal information and subscriber profile IDs SPIDs.

The mapping relationship between terminal information and subscriber profile IDs SPIDs includes: a mapping relationship between terminal information and terminal priority indicators, and a mapping relationship between terminal priority indicators and SPIDs, where the mapping relationship is expressed in a form of a mapping table.

The transmitter 1205 is configured to send the service policy information to a base station, where the service policy information is used in a process in which the base station obtains terminal information of a first terminal.

The mapping relationship between terminal information and terminal priority indicators is used to indicate a correspondence between terminal information and terminal priority indicators, where the terminal information includes one of or a combination of the following information: a terminal type, a terminal subscription state, a terminal supplier, a terminal model, and a terminal operating system; and there is a correspondence between terminal priority indicators and each type of information in the terminal information.

The mapping relationship between terminal priority indicators and SPIDs is used to indicate a correspondence between terminal priority indicators and SPIDs, where there is a correspondence between the SPIDs and the terminal priority indicators.

Further, the mapping relationship between terminal priority indicators and SPIDs is used to indicate a correspondence between SPIDs configured by an operator and the terminal priority indicators.

The element management server provided by this aspect of the present disclosure obtains first SPID information to facilitate a base station obtain terminal information, thereby solving the problem of not being able to obtain terminal information by a base station. Further, parameter optimization and terminal-specific support may be implemented for different terminal types, to improve network performance.

An aspect of the present disclosure provides a home subscriber server 13. Referring to FIG. 14, the home subscriber server 13 includes: at least one processor 1301, memory 1302, receiver 1303, transmitter 1305, and bus 1304, and the at least one processor 1301, memory 1302, receiver 1303, and transmitter 1305 are connected and communicate with each other by using the bus 1304.

The bus 1304 may be an industry standard architecture (Industry Standard Architecture, ISA for short) bus, a peripheral component interconnect (Peripheral Component Interconnect, PCI for short) bus, an extended industry standard architecture (Extended Industry Standard Architecture, EISA for short) bus, or the like; The bus 1304 may be classified into an address bus, a data bus, a control bus, and so on. For the convenience of illustration, the bus 1304 is indicated by using only one bold line in FIG. 14, which, however, does not mean that there is only one bus or one type of bus.

The memory 1302 is configured to store program code, where the program code includes an operation instruction. The memory 1302 may include a high-speed RAM, and may further include a non-volatile memory (non-volatile memory), for example, at least one magnetic disk memory.

The processor 1301 may be a central processing unit (Central Processing Unit, CPU for short), or may be an application specific integrated circuit (Application Specific Integrated Circuit, ASIC for short), or may be configured as one or more integrated circuits for implementing the aspects of the present disclosure.

The processor 1301 is further configured to invoke the program code in the memory.

The receiver 1303 is configured to obtain first subscriber profile ID SPID information, where the first SPID information is an SPID corresponding to a first terminal.

The transmitter 1305 is configured to send the first SPID information to a mobility management entity MME, so that the MME sends the first SPID information to a base station.

The home subscriber server provided by this aspect of the present disclosure obtains first SPID information to facilitate a base station obtain terminal information, thereby solving the problem of not being able to obtain terminal information by a base station. Further, parameter optimization and terminal-specific support may be implemented for different terminal types, to improve network performance.

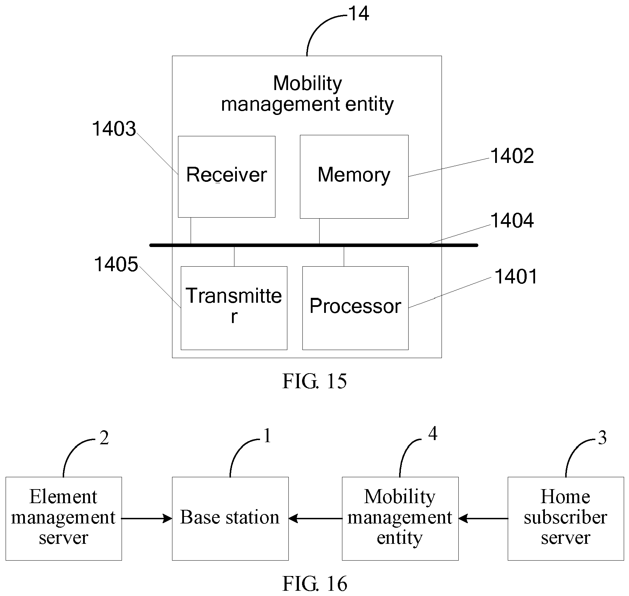

An aspect of the present disclosure provides a mobility management entity 14. Referring to FIG. 15, the mobility management entity 14 includes: at least one processor 1401, memory 1402, receiver 1403, transmitter 1405, and bus 1404, and the at least one processor 1401, memory 1402, receiver 1403, and transmitter 1405 are connected and communicate with each other by using the bus 1404.

The bus 1404 may be an industry standard architecture (Industry Standard Architecture, ISA for short) bus, a peripheral component interconnect (Peripheral Component Interconnect, PCI for short) bus, an extended industry standard architecture (Extended Industry Standard Architecture, EISA for short) bus, or the like. The bus 1404 may be classified into an address bus, a data bus, a control bus, and so on. For the convenience of illustration, the bus 1404 is indicated by using only one bold line in FIG. 15, which, however, does not mean that there is only one bus or one type of bus.

The memory 1402 is configured to store program code, where the program code includes an operation instruction. The memory 1402 may include a high-speed RAM, and may further include a non-volatile memory (non-volatile memory), for example, at least one magnetic disk memory.

The processor 1401 may be a central processing unit (Central Processing Unit, CPU for short), or may be an application specific integrated circuit (Application Specific Integrated Circuit, ASIC for short), or may be configured as one or more integrated circuits for implementing the aspects of the present disclosure.

The processor 1401 is further configured to invoke the program code in the memory.

The receiver 1403 is configured to receive first subscriber profile ID SPID information sent by a home subscriber server HSS, where the first SPID information is an SPID corresponding to a first terminal; and
The transmitter 1405 is configured to send the first SPID information to a base station, where the first SPID information is used in a process in which the base station obtains terminal information of the first terminal.

The mobility management entity provided by this aspect of the present disclosure obtains first SPID information to facilitate a base station obtain terminal information, thereby solving the problem of not being able to obtain terminal information by a base station. Further, parameter optimization and terminal-specific support may be implemented for different terminal types, to improve network performance.

An aspect of the present disclosure provides a system for obtaining information. Referring to FIG. 16, the system includes: a base station 1, an element management server EMS 2, a home subscriber server HSS 3, and a mobility management entity MME 4, where:
the base station 1 is configured to receive service policy information sent by the element management server EMS, where the service policy information includes: a mapping relationship between terminal information and subscriber profile IDs SPIDs; obtain first SPID information, where the first SPID information is an SPID corresponding to a first terminal; and obtain, according to the service policy information and the first SPID information, terminal information of the first terminal;
the EMS 2 is configured to obtain the service policy information; and send the service policy information to the base station 1, where the service policy information is used in a process in which the base station obtains the terminal information of the first terminal;
the HSS 3 is configured to obtain first subscriber profile ID SPID information; and send the first SPID information to the mobility management entity MME 4, so that the MME 4 sends the first SPID information to the base station 1; and
the MME 4 is configured to receive the first subscriber profile ID SPID information sent by the home subscriber server HSS 3; and send the first SPID information to the base station 1.

The mapping relationship between terminal information and subscriber profile IDs SPIDs includes: a mapping relationship between terminal information and terminal priority indicators, and a mapping relationship between terminal priority indicators and SPIDs, where the mapping relationship is expressed in a form of a mapping table.

The base station 1 is further configured to obtain, according to SPID information and by using the mapping relationship between terminal priority indicators and SPIDs, terminal priority indicator information; and obtain, according to the terminal priority indicator information and by using the mapping relationship between terminal information and terminal priority indicators, terminal information.

Specifically, the mapping relationship between terminal information and terminal priority indicators is used to indicate a correspondence between terminal information and terminal priority indicators, where the terminal information includes one of or a combination of the following information: a terminal type, a terminal subscription state, a terminal supplier, a terminal model, and a terminal operating system; and there is a correspondence between terminal priority indicators and each type of information in the terminal information.

The mapping relationship between terminal priority indicators and SPIDs is used to indicate a correspondence between terminal priority indicators and SPIDs, where there is a correspondence between SPIDs and terminal priority indicators.

The mapping relationship between terminal priority indicators and SPIDs is further used to indicate a correspondence between SPIDs configured by an operator and terminal priority indicators.

The system for obtaining information according to this aspect of the present disclosure obtains, according to SPID information of a first terminal and a mapping relationship between terminal information and subscriber profile IDs SPIDs, terminal information of the first terminal, thereby solving the problem of not being able to obtain terminal information by a base station. Further, parameter optimization and terminal-specific support may be implemented for different terminal types, to improve network performance.

The foregoing descriptions are merely specific implementations of the present disclosure, but are not intended to limit a protection scope of the present disclosure. Therefore, the protection scope of the present disclosure shall be defined by the claims that follow.

## Claims

1. A method performed by a base station for obtaining terminal information, comprising:
receiving (503), when a subscriber is registered or terminal information is changed, service policy information sent by an element management server, EMS, wherein the service policy information comprises a mapping relationship between terminal information and subscriber profile IDs, SPIDs, wherein the mapping relationship between terminal information and subscriber profile IDs SPIDs comprises a first mapping table that maps terminal information and terminal priority indicators, and a second mapping table that maps SPIDs, operator-defined SPIDs and terminal priority indicators;
obtaining (504, 505) a first SPID corresponding to a first terminal; wherein the obtaining the first SPID comprises receiving the first SPID sent by a mobility management entity, MME, wherein the first SPID is sent by a home subscriber server, HSS, to the MME;
learning an existing policy according to the operator-defined SPID, wherein the operator-defined SPID is obtained by mapping the first SPID to the operator-defined SPID in the second mapping table; and
obtaining (506, 507) according to the service policy information and the first SPID, terminal information of the first terminal, and wherein the base station obtains the terminal information of the first terminal by mapping (506) the first SPID to a terminal priority indicator and mapping (507) the terminal priority indicator to terminal information in the mapping tables; wherein the terminal information comprises one of or a combination of the following information: a terminal supplier, a terminal model, and a terminal operating system.

2. Abase station (7), comprising:
a receiving unit (71), configured to receive, when a subscriber is registered or terminal information is changed, service policy information sent by an element management server, EMS, wherein the service policy information comprises a mapping relationship between terminal information and subscriber profile IDs, SPIDs, wherein the mapping relationship between terminal information and subscriber profile IDs SPIDs comprises a first mapping table that maps terminal information and terminal priority indicators, and a second mapping table that maps SPIDs, operator-defined SPIDs and terminal priority indicators;
an obtaining unit (72), configured to obtain first SPID, corresponding to a first terminal, wherein the obtaining unit is specifically configured to receive the first SPID sent by a mobility management entity, MME, wherein the first SPID is sent by a home subscriber server, HSS, to the MME; and
wherein, the base station is configured to learn an existing policy according to the operator-defined SPID, wherein the operator-defined SPID is obtained by mapping the first SPID to the operator-defined SPID in the second mapping table; and
the base station is further configured to obtain, according to the service policy information and the first SPID, terminal information of the first terminal, wherein the base station obtains the terminal information of the first terminal by mapping the first SPID to a terminal priority indicator and mapping terminal priority indicator to terminal information in the mapping tables; wherein the terminal information comprises one of or a combination of the following information: a terminal supplier, a terminal model, and a terminal operating system.

## Patentansprüche

1. Verfahren, das durch eine Basisstation durchgeführt wird, um Endgerätinformationen zu gewinnen, umfassend:
Empfangen (503), wenn ein Teilnehmer registriert wird oder Endgerätinformationen geändert werden, von Dienstrichtlinieninformationen, die durch einen Elementmanagementserver, EMS, gesendet werden, wobei die Dienstrichtlinieninformationen ein Abbildungsverhältnis zwischen Endgerätinformationen und Teilnehmerprofil-IDs, SPIDs (Subscriber Profile IDs), umfassen, wobei das Abbildungsverhältnis zwischen Endgerätinformationen und Teilnehmerprofil-IDs, SPIDs eine erste Abbildungstabelle, die Endgerätinformationen und Endgerätprioritätsindikatoren abbildet, und eine zweite Abbildungstabelle, die SPIDs, bedienerdefinierte SPIDs und Endgerätprioritätsindikatoren abbildet, umfasst;
Gewinnen (504, 505) einer ersten SPID entsprechend einem ersten Endgerät; wobei das Gewinnen der ersten SPID ein Empfangen der ersten SPID umfasst, die durch eine Mobilitätsmanagementinstanz, MME (Mobility Management Entity), gesendet wird, wobei die erste SPID durch einen "Home Subscriber Server" (zentrale Teilnehmerdatenbank) HSS, an die MME gesendet wird;
Lernen einer bestehenden Richtlinie gemäß der bedienerdefinierten SPID, wobei die bedienerdefinierte SPID durch Abbilden der ersten SPID auf die bedienerdefinierte SPID in der zweiten Abbildungstabelle gewonnen wird; und
Gewinnen (506, 507) von Endgerätinformationen des ersten Endgeräts gemäß den Dienstrichtlinieninformationen und der ersten SPID, und wobei die Basisstation die Endgerätinformationen des ersten Endgeräts durch Abbilden (506) der ersten SPID auf einen Endgerätprioritätsindikator und Abbilden (507) des Endgerätprioritätsindikators auf Endgerätinformationen in den Abbildungstabellen gewinnt; wobei die Endgerätinformationen eine oder eine Kombination der folgenden Informationen umfassen: einen Endgerätlieferanten, ein Endgerätmodell und ein Endgerätbetriebssystem.

2. Basisstation (7), umfassend:
eine Empfangseinheit (71), die konfiguriert ist zum Empfangen, wenn ein Teilnehmer registriert wird oder Endgerätinformationen geändert werden, von Dienstrichtlinieninformationen, die durch einen Elementmanagementserver, EMS, gesendet werden, wobei die Dienstrichtlinieninformationen ein Abbildungsverhältnis zwischen Endgerätinformationen und Teilnehmerprofil-IDs, SPIDs, umfassen, wobei das Abbildungsverhältnis zwischen Endgerätinformationen und Teilnehmerprofil-IDs, SPIDs eine erste Abbildungstabelle, die Endgerätinformationen und Endgerätprioritätsindikatoren abbildet, und eine zweite Abbildungstabelle, die SPIDs, bedienerdefinierte SPIDs und Endgerätprioritätsindikatoren abbildet, umfasst; eine Gewinnungseinheit (72), die konfiguriert ist zum Gewinnen einer ersten SPID entsprechend einem ersten Endgerät, wobei die Gewinnungseinheit im Speziellen konfiguriert ist zum Empfangen der ersten SPID, die durch eine Mobilitätsmanagementinstanz, MME, gesendet wird, wobei die erste SPID durch einen "Home Subscriber Server" (zentrale Teilnehmerdatenbank) HSS, an die MME gesendet wird;
wobei die Basisstation konfiguriert ist zum Lernen einer bestehenden Richtlinie gemäß der bedienerdefinierten SPID, wobei die bedienerdefinierte SPID durch Abbilden der ersten SPID auf die bedienerdefinierte SPID in der zweiten Abbildungstabelle gewonnen wird; und
die Basisstation ferner konfiguriert ist zum Gewinnen von Endgerätinformationen des ersten Endgeräts gemäß den Dienstrichtlinieninformationen und der ersten SPID, wobei die Basisstation die Endgerätinformationen des ersten Endgeräts durch Abbilden der ersten SPID auf einen Endgerätprioritätsindikator und Abbilden des Endgerätprioritätsindikators auf Endgerätinformationen in den Abbildungstabellen gewinnt; wobei die Endgerätinformationen eine oder eine Kombination der folgenden Informationen umfassen: einen Endgerätlieferanten, ein Endgerätmodell und ein Endgerätbetriebssystem.

## Revendications

1. Procédé mis en œuvre par une station de base pour obtenir des informations de terminal, comprenant :
réception (503), lorsqu'un abonné est enregistré ou lorsque des informations de terminal sont modifiées, d'informations de politique de service envoyées par un serveur de gestion d'élément, EMS, les informations de politique de service comprenant une relation de mise en correspondance entre les informations de terminal et des ID de profil d'abonné, SPID, la relation de mise en correspondance entre les informations de terminal et les ID de profil d'abonné, SPID, comprenant une première table de mise en correspondance qui met en correspondance les informations de terminal et des indicateurs de priorité de terminal, et une deuxième table de mise en correspondance qui met en correspondance les SPID, des SPID définis par l'opérateur et les indicateurs de priorité de terminal ;
obtention (504, 505) d'un premier SPID correspondant à un premier terminal ;
l'obtention du premier SPID comprenant la réception du premier SPID envoyé par une entité de gestion de la mobilité, MME, le premier SPID étant envoyé par un serveur d'abonné résidentiel, HSS, à la MME ;
apprentissage d'une politique existante conformément au SPID défini par l'opérateur, le SPID défini par l'opérateur étant obtenu par mise en correspondance du premier SPID avec le SPID défini par l'opérateur dans la deuxième table de mise en correspondance ; et
obtention (506, 507), conformément aux informations de politique de service et au premier SPID, d'informations de terminal du premier terminal, et la station de base obtenant les informations de terminal du premier terminal par mise en correspondance (506) du premier SPID avec un indicateur de priorité de terminal et par mise en correspondance (507) de l'indicateur de priorité de terminal avec les informations de terminal dans les tables de mise en correspondance ; les informations de terminal comprenant une ou une combinaison des informations suivantes : un fournisseur de terminal, un modèle de terminal et un système d'exploitation de terminal.

2. Station de base (7), comprenant :
une unité de réception (71), configuré pour recevoir, lorsqu'un abonné est enregistré ou lorsque des informations de terminal sont modifiées, des informations de politique de service envoyées par un serveur de gestion d'élément, EMS, les informations de politique de service comprenant une relation de mise en correspondance entre les informations de terminal et des ID de profil d'abonné, SPID, la relation de mise en correspondance entre les informations de terminal et les ID de profil d'abonné, SPID, comprenant une première table de mise en correspondance qui met en correspondance les informations de terminal et des indicateurs de priorité de terminal, et une deuxième table de mise en correspondance qui met en correspondance les SPID, des SPID définis par l'opérateur et les indicateurs de priorité de terminal ;
une unité d'obtention (72), configurée pour obtenir un premier SPID correspondant à un premier terminal ; l'unité d'obtention étant configurée spécifiquement pour recevoir le premier SPID envoyé par une entité de gestion de la mobilité, MME, le premier SPID étant envoyé par un serveur d'abonné résidentiel, HSS, à la MME ;
la station de base étant configurée pour apprendre une politique existante conformément au SPID défini par l'opérateur, le SPID défini par l'opérateur étant obtenu par mise en correspondance du premier SPID avec le SPID défini par l'opérateur dans la deuxième table de mise en correspondance ; et
la station de base est en outre configurée pour obtenir, conformément aux informations de politique de service et au premier SPID, des informations de terminal du premier terminal, la station de base obtenant les informations de terminal du premier terminal par mise en correspondance du premier SPID avec un indicateur de priorité de terminal et par mise en correspondance de l'indicateur de priorité de terminal avec les informations de terminal dans les tables de mise en correspondance ; les informations de terminal comprenant une ou une combinaison des informations suivantes : un fournisseur de terminal, un modèle de terminal et un système d'exploitation de terminal.
